# EUROPÄISCHE PATENTSCHRIFT

(11) **EP 4 166 524 B1**
(45) Veröffentlichungstag und Bekanntmachung des Hinweises auf die Patenterteilung: **22.11.2023**
(21) Anmeldenummer: 21202639.7
(22) Anmeldetag: 14.10.2021
(51) Int. Cl.: C03C 23/00, A61C 13/00, F27B 17/00

(54) **OFEN ZUM ERHITZEN EINES DENTALOBJEKTES**
FURNACE FOR HEATING A DENTAL OBJECT
FOUR PERMETTANT DE CHAUFFER UN OBJET DENTAIRE

(43) Veröffentlichungstag der Anmeldung: 19.04.2023
(73) Patentinhaber: Ivoclar Vivadent AG, 9494 Schaan (LI)
(72) Erfinder: RITZBERGER, Christian, 9472 Grabs (CH); RAMPF, Markus, 7212 Seewis Dorf (CH); DITTMER, Marc, 6800 Feldkirch (AT); NIEDRIG, Christian, 9464 Rüthi (CH)
(74) Vertreter: Baldus, Oliver

(56) Entgegenhaltungen:
- WO-A1-2004/051716
- WO-A1-2011/113568
- JP-U- 3 203 603

## Beschreibung

Die vorliegende Erfindung betrifft einen Ofen zum Erhitzen eines Dentalobjektes und ein Verfahren zum Erhitzen des Dentalobjekts.

Polychrome Gläser und Glaskeramiken können durch eine Belichtung zusammen mit einer thermischen Behandlung eingefärbt werden, wie beispielsweise ein Quarzglas, eine Quarz-Glaskeramik, ein Lithiumalumosilikatglas, eine Lithiumaluminosilikat-Glaskeramik, ein Lithiumsilikatglas oder eine Lithiumsilikat-Glaskeramik. Die Belichtung erfolgt hierbei üblicherweise mittels UV-Strahlung. Die unterschiedliche Farbwirkung wird nach erfolgter Belichtung hauptsächlich über eine Temperaturbehandlung hergestellt.

Die polychromen Gläser und Glaskeramiken umfassen hierzu beispielsweise eine oxidierbare Komponente und eine reduzierbare Färbekomponente. Die oxidierbare Komponente ist eine Komponente, die durch Bestrahlung oxidiert werden bzw. zur Elektronenabgabe angeregt werden kann. Oxidierbare Komponenten sind beispielsweise Cer-Ionen, Europium-Ionen, Kupfer-Ionen und deren Mischungen. Die reduzierbare Färbekomponente ist beispielsweise eine Komponente, die unter Ausbildung einer Farbänderung reduziert werden kann. Bevorzugte reduzierbare Färbekomponenten sind Kationen von Metallen, wie beispielsweise von Silber, Gold, Kupfer oder deren Kombinationen.

Die Druckschrift WO 2011/113568 A1 betrifft ein Verfahren zur Behandlung einer Zahnimplantat-Komponente.

Die Druckschrift JP 3 203603 U betrifft ein Gerät zum Aussenden von ultravioletter Strahlung, das als Reinigungsgerät zum Reinigen von Bakterien von medizinischen Instrumenten verwendet wird, wie beispielsweise Zahnimplantaten

Die Druckschrift WO 2004/051716 A1 betrifft ein Belichtungsgerät zum Bilden eines dünnen Musters auf einem elektronischen Gerät, wie beispielsweise für ein Ätzen von Leiterbahnen einem Halbleiterelement.

Es ist die technische Aufgabe der vorliegenden Erfindung, eine anwendungssichere und einfache Farbgebung eines Dentalobjekts zu ermöglichen.

Diese technische Aufgabe wird durch Gegenstände nach den unabhängigen Ansprüchen gelöst. Technisch vorteilhafte Ausführungsformen sind Gegenstand der abhängigen Ansprüche, der Beschreibung und der Zeichnungen.

Gemäß einem ersten Aspekt wird die technische Aufgabe durch einen Ofen zum Erhitzen eines Dentalobjektes gelöst, mit einer Kammer zur Aufnahme des Dentalobjekts; einer Strahlungsquelle zum Emittieren von Strahlung mit einer Wellenlänge, die kleiner als 350 nm ist, in die Kammer; und einer Heizeinrichtung zum Erhitzen des Dentalobjekts in der Kammer. Dadurch wird der technische Vorteil erreicht, dass eine Belichtung und thermische Behandlung zur Farbgebung des Dentalobjekts in einem Gerät durchgeführt werden kann.

In einer technisch vorteilhaften Ausführungsform des Ofens ist die Heizeinrichtung ausgebildet, das Dentalobjekt auf eine Temperatur bis zu 1200°C zu erhitzen. Die Heizeinrichtung kann ausgebildet sein, das Dentalobjekt in einem Temperaturbereich zwischen 25°C und 1200°C, zwischen 25°C und 1100°C oder zwischen 25°C und 1000°C zu erhitzen. Dadurch wird beispielsweise der technische Vorteil erreicht, dass das Dentalobjekt auf geeignete Temperaturen zur Farbgebung erwärmt werden kann.

In einer weiteren technisch vorteilhaften Ausführungsform des Ofens umfasst der Ofen eine Steuereinrichtung zum Steuern der Strahlungsquelle und/oder der Heizeinrichtung. Dadurch wird beispielsweise der technische Vorteil erreicht, dass die Strahlungsquelle und die Heizeinrichtung ohne direkten Eingriff eines Benutzers automatisch aktiviert werden können.

In einer weiteren technisch vorteilhaften Ausführungsform des Ofens umfasst die Steuereinrichtung einen angelernten Algorithmus zum Steuern der Strahlungsquelle und/oder der Heizeinrichtung. Der Algorithmus kann ein Machine-Learning-Algorithmus sein. Dadurch wird beispielsweise der technische Vorteil erreicht, dass sich die Farbgebung des Dentalobjekts anhand von Trainingsdaten automatisieren lässt.

In einer weiteren technisch vorteilhaften Ausführungsform des Ofens ist die Steuereinrichtung ausgebildet, eine Intensität der Strahlungsquelle und/oder eine Temperatur der Heizeinrichtung zeitlich zu steuern. Die Steuereinrichtung kann beispielsweise vorgegebene Intensitäts- und Temperaturverläufe ausführen. Dadurch wird beispielsweise der technische Vorteil erreicht, dass eine fein abgestimmte Belichtung und thermische Behandlung durchgeführt werden kann, um eine gewünschte Farbgebung des Dentalobjektes zu erhalten.

In einer weiteren technisch vorteilhaften Ausführungsform des Ofens ist die Steuereinrichtung ausgebildet, die Strahlungsquelle und Heizeinrichtung gleichzeitig oder zeitversetzt zu aktivieren. Dadurch wird beispielsweise der technische Vorteil erreicht, dass die Belichtung vor oder während der thermischen Behandlung durchgeführt werden kann.

In einer weiteren technisch vorteilhaften Ausführungsform des Ofens umfasst der Ofen eine elektronische Kamera zum Erfassen eines Farbwertes des Dentalobjektes. Dadurch wird beispielsweise der technische Vorteil erreicht, dass der Farbwert des Dentalobjekts während des Erhitzens überwacht werden kann.

In einer weiteren technisch vorteilhaften Ausführungsform des Ofens ist der Ofen ausgebildet, ein Erhitzen des Dentalobjekts zu beenden, wenn das Dentalobjektes einen vorgegebenen Farbwert erreicht hat. Dadurch wird beispielsweise der technische Vorteil erreicht, dass der vorgegebene Farbwert präzise erreicht werden kann.

In einer weiteren technisch vorteilhaften Ausführungsform des Ofens umfasst der Ofen eine Kühleinrichtung zum Kühlen des erwärmten Dentalobjektes. Dadurch wird beispielsweise der technische Vorteil erreicht, dass ein erreichter Farbwert stabilisiert werden kann und eine Nachfärbung des Dentalobjektes verhindert wird.

In einer weiteren technisch vorteilhaften Ausführungsform des Ofens ist die Heizeinrichtung durch eine Infrarot-Strahlungsquelle, eine Laser-Strahlungsquelle, eine Mikrowellen-Strahlungsquelle oder eine Induktions-Strahlungsquelle gebildet. Dadurch wird beispielsweise der technische Vorteil erreicht, dass besonders geeignete Heizeinrichtungen zum Erhitzen des Dentalobjektes verwendet werden.

In einer weiteren technisch vorteilhaften Ausführungsform des Ofens umfasst der Ofen eine Bewegungseinrichtung zum Bewegen des Dentalobjekts vor der Heizeinrichtung und/oder der Strahlungsquelle. Dadurch wird beispielsweise der technische Vorteil erreicht, dass die thermische Behandlung und die Strahlung auf unterschiedliche Bereiche des Dentalobjekts gerichtet werden kann.

Gemäß einem zweiten Aspekt wird die technische Aufgabe durch ein Verfahren zum Erhitzen eines Dentalobjekts gelöst, mit den Schritten eines Aufnehmens des Dentalobjekts in einer Kammer; eines Emittierens von Strahlung mit einer Wellenlänge, die kleiner als 350 nm ist, in die Kammer durch eine Strahlungsquelle; und eines Erhitzens des Dentalobjekts in der Kammer durch eine Heizeinrichtung. Durch das Verfahren werden die gleichen technischen Vorteile wie durch den Ofen nach dem ersten Aspekt erreicht.

In einer technisch vorteilhaften Ausführungsform des Verfahrens werden eine Intensität der Strahlungsquelle und eine Temperatur der Heizeinrichtung zeitlich gesteuert. Dadurch wird beispielsweise ebenfalls der technische Vorteil erreicht, dass eine fein abgestimmte Belichtung und thermische Behandlung durchgeführt werden kann, um eine gewünschte Farbgebung des Dentalobjektes zu erhalten.

In einer weiteren technisch vorteilhaften Ausführungsform des Verfahrens werden die Strahlungsquelle und Heizeinrichtung gleichzeitig oder zeitversetzt aktiviert. Dadurch wird beispielsweise ebenfalls der technische Vorteil erreicht, dass die Belichtung vor oder während der thermischen Behandlung durchgeführt werden kann.

In einer weiteren technisch vorteilhaften Ausführungsform des Verfahrens wird ein Farbwert des Dentalobjektes durch eine elektronische Kamera erfasst. Dadurch wird beispielsweise ebenfalls der technische Vorteil erreicht, dass der Farbwert des Dentalobjekts während des Erhitzens überwacht werden kann.

In einer weiteren technisch vorteilhaften Ausführungsform des Verfahrens wird ein Erhitzen des Dentalobjekts beendet, wenn das Dentalobjektes einen vorgegebenen Farbwert erreicht hat. Dadurch wird beispielsweise ebenfalls der technische Vorteil erreicht, dass der vorgegebene Farbwert präzise erreicht werden kann.

Ausführungsbeispiele der Erfindung sind in den Zeichnungen dargestellt und werden im Folgenden näher beschrieben.

Es zeigen:
- Fig. 1: eine schematische Darstellung eines Ofens zum Erhitzen eines Dentalobjektes; und
- Fig. 2: ein Blockdiagramm eines Verfahrens zum Erhitzen des Dentalobjekts.

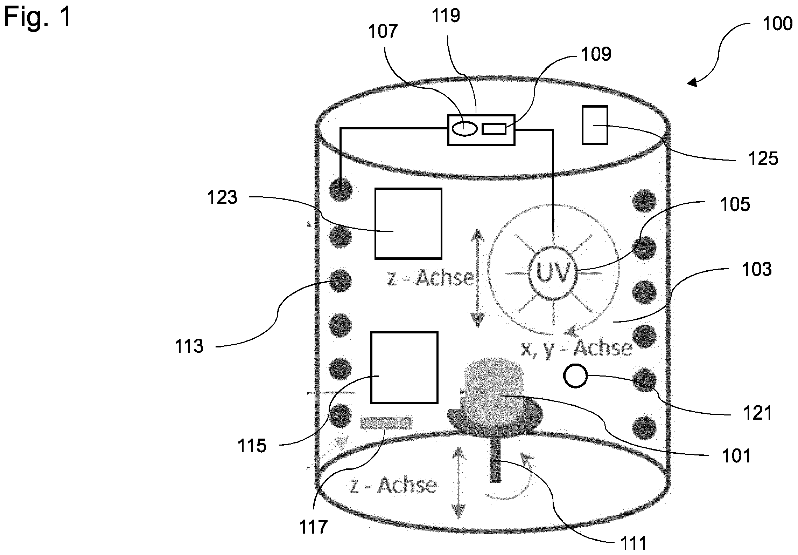

Fig. 1 zeigt eine schematische Darstellung eines Ofens 100 zum Erhitzen eines Dentalobjektes 101 in einer Kammer 103. Der Ofen 100 umfasst eine Heizeinrichtung 113 zum Erhitzen des Dentalobjekts 101 in der Kammer 103, wie beispielsweise eine Heizwendel. Der Ofen 100 kann unter Vakuum (einstellbarer Sauerstoffpartialdruck) oder unterschiedlichen Atmosphären (Luft, Schutzgas) oder Mischungen betrieben werden.

Das Dentalobjekt 101 ist aus einem polychromen Glas und oder einer polychromen Glaskeramik hergestellt, die durch eine Belichtung zusammen mit einer thermischen Behandlung eingefärbt werden kann. Die unterschiedliche Farbwirkung des Dentalobjektes 101 wird nach erfolgter Belichtung hauptsächlich über eine Temperaturbehandlung hergestellt. Das Dentalobjekt 101 ist eine dentale Restauration, wie beispielsweise eine Krone, eine Brücke, ein Veneer, ein Abutment, ein Inlay oder ein Onlay.

Die Heizeinrichtung 113 kann beispielsweise durch eine Infrarot-Strahlungsquelle, eine Laser-Strahlungsquelle, eine Mikrowellen-Strahlungsquelle oder eine Induktions-Strahlungsquelle gebildet sein. Die Laser-Strahlungsquelle kann durch einen thermischen Laser oder Infrarot-Laser gebildet sein, wie beispielsweise ein Nd:YAG-Laser, ein Er:YAG-Laser, ein CO- oder CO2-Laser. Die Heizeinrichtung 113 kann beispielsweise auch durch eine elektrisch betriebene Infrarotlampe, eine Rotlichtlampe oder eine Wärmelampe gebildet sein.

Falls ausreichend Energie von der Glaskeramik absorbiert wird, kann auch jede andere Wellenlänge verwendet werden, wie beispielsweise im sichtbaren oder UV-Bereich, da es für die Erwärmung lediglich auf den thermischen Eintrag in das Dentalobjekt 101 ankommt. Alternativ kann die Wärmebehandlung auch mittels Mikrowellenstrahlung erfolgen.

Die Heizeinrichtung 113 ist in der Lage, das Dentalobjekt 101 auf eine Temperatur bis zu 1200°C zu erhitzen, insbesondere in einem Temperaturbereich zwischen 25°C und 1200°C, zwischen 25°C und 1100°C oder zwischen 25°C und 1000°C.

Die Heizeinrichtung 113 kann innerhalb oder außerhalb der Kammer 103 angeordnet sein. Eine Strahlungsführung in die Kammer 103 kann mittels einer Lichtleitfaser erfolgen. Die Heizeinrichtung 113, wie beispielsweise ein IR-Laser, kann auch außerhalb der Kammer angeordnet sein. Die emittierte Strahlung kann dann mittels eines Scanners (z.B. DMD - Digital Mirror Device) durch ein geeignetes Sichtfenster, über das im Inneren der Kammer 103 angeordnete Dentalobjekt 101 gerastert werden. Dadurch wird beispielsweise der technische Vorteil erreicht, dass das Dentalobjekt 101 erwärmt und eine Farbgebung des Dentalobjekts abgeschlossen werden kann.

Zusätzlich zur Heizeinrichtung 113 umfasst der Ofen 100 eine Strahlungsquelle 105. Die Strahlungsquelle 105 dient zum Belichten des Dentalobjekts 101 vor oder während der thermischen Behandlung in dem Ofen 100. Die Strahlungsquelle 105 dient zum Emittieren von Strahlung mit einer Wellenlänge, die kleiner als 350 nm ist, in die Kammer 103. Die emittierte Strahlung dient zum Belichten des Dentalobjekts. Die emittierte Strahlung von der Strahlungsquelle 105 trifft auf das Dentalobjekt 101. Durch die Strahlung werden in dem Dentalobjekt 101 elektronische Übergänge angeregt, die bei einer anschließenden oder gleichzeitigen Erwärmung des Dentalobjekts 101 zu einer Farbänderung führen.

Die Strahlungsquelle 105 wird elektrisch betrieben und ist beispielsweise durch eine Quecksilberdampflampe, eine Quarzlampe, eine Schwarzlichtlampe, einen UV-Laser oder eine UV-Leuchtdiode gebildet. Die Strahlungsquelle 105 kann aber auch eine Röntgenröhre zur Erzeugung von Röntgenstrahlen umfassen. In diesem Fall kann die Strahlungsquelle 105 Strahlung mit einer Wellenlänge von 5 pm bis 10 nm emittieren.

Die Strahlungsquelle 105 ist geeignet, Strahlung mit einer Wellenlänge zwischen 350 nm und 5 pm, vorzugsweise zwischen 350 nm und 10 nm, oder höchst vorzugsweise zwischen 350 nm und 100 nm zu emittieren. Neben der Verwendung von UV-Strahlung ist es aber auch möglich, das Dentalobjekt 101 mit energiereicher Strahlung zu belichten. Beispielsweise mit Röntgenstrahlung mit einer Wellenlänge von 5 pm bis 10 nm. Besonders bevorzugt ist jedoch Strahlung im Bereich von 100 nm bis 350 nm, um Elektronenübergänge in dem polychromen Material anzuregen.

Der Ofen 100 kann einen UV-transparenten Halter umfassen, auf den ein Dentalobjekt 101 mit einer Aushöhlung gesetzt werden kann und der eine Beleuchtung des Dentalobjekts 101 auf der Innenseite ermöglicht. Die Kammer 103 kann eine Tür 115 umfassen, die geöffnet wird, um das Dentalobjekt 101 in das Innere einzulegen. Zum Belichten des Dentalobjekts 101 wird die Tür 115 geschlossen, so dass kein Licht aus der Kammer 103 nach außen treten kann.

Das Strahlungsquelle 105 kann einen elektrischen Schalter umfassen, der beim Öffnen der Tür 115 betätigt wird und durch den die Strahlungsquelle 105 deaktiviert wird. Dadurch wird der technische Vorteil erreicht, dass das Austreten gefährlicher Strahlung aus der Kammer 103 verhindert wird. Die Strahlungsquelle 105 ist beispielsweise in einer Wand der Kammer 103 angeordnet, so dass diese in den Innenraum strahlen kann. Vor der Strahlungsquelle 105 kann eine Blende 121 angeordnet sein, die die seitlichen Bereiche der Strahlung abschirmt, wie beispielsweise eine Lochblende. Dadurch kann die emittierte Strahlung auf bestimmte Bereiche des Dentalobjektes 101 gerichtet werden. Der Ofen 100 kann aber auch einen Lichtleiter umfassen, mit dem die Strahlung von der Strahlungsquelle 105 an das Dentalobjekt 101 herangeführt wird, wie beispielsweise eine Quarzglasfaser. Die Strahlungsquelle 105 kann hinter einem Spezialglas angeordnet sein, wie beispielsweise hinter einer Filterscheibe, die nur vorgegebene Wellenlängenbereiche hindurchtreten lässt.

Um die Intensität der Strahlungsquelle 105 oder die Heizleistung der Heizeinrichtung 113 einzustellen, umfasst der Ofen 100 eine Einstellungseinrichtung 107. Die Einstellungseinrichtung 107 kann durch entsprechende Regler gebildet sein, mit denen die Leistung der Strahlungsquelle 105 oder der Heizeinrichtung 113 geregelt werden können. Mit dieser Einstellungseinrichtung 107 kann beispielsweise der Strom oder die Spannung eingestellt werden, mit der die Strahlungsquelle 105 oder die Heizeinrichtung 113 betrieben wird.

Die Einstellungseinrichtung 107 kann allerdings auch digital implementiert sein. In diesem Fall umfasst der Ofen 100 eine Datenschnittstelle 117, über die von einem externen Gerät Daten für eine Steuerung der Intensität der Strahlungsquelle 105 oder der Leistung der Heizeinrichtung 113 übertragen werden können, wie beispielsweise eine WLAN-Schnittstelle oder eine Bluetooth-Schnittstelle.

Beispielsweise kann ein Mobiltelefon oder ein Tablet mit einer geeigneten Applikation ausgerüstet werden, mit der sich die Intensität der Strahlungsquelle 105 oder die Leistung der Heizeinrichtung 113 steuern lässt. Zu diesem Zweck umfasst der Ofen 100 eine Steuereinrichtung 119, die mit der Applikation kommuniziert und die die ausgesandte Intensität der Strahlungsquelle 105 oder die Leistung der Heizeinrichtung 113 erhöhen oder verringern kann. Die Steuereinrichtung 119 kann einen Mikroprozessor und einen digitalen Speicher umfassen, in dem Daten und Programme für die Steuerung der Funktionen des Ofens 100 abgelegt sind.

Zudem kann die Steuereinrichtung 119 eine Zeitschalteinrichtung 109 umfassen, die die Strahlungsquelle 105 oder die Heizeinrichtung 113 für einen vorgegebenen Zeitraum aktiviert und nach Ablauf des vorgegebenen Zeitraums automatisch deaktiviert. Die Steuereinrichtung 119 kann die Strahlungsquelle 105 oder die Heizeinrichtung 113 gleichzeitig oder zeitversetzt aktivieren. Dadurch wird der technische Vorteil erreicht, dass das Dentalobjekt 101 automatisch für eine bestimmte Belichtungsdauer belichtet werden kann und eine definierte Belichtung des Dentalobjekts 101 mit anschließender Wärmebehandlung erfolgt. Die Steuereinrichtung 119 kann ausgebildet sein, die Intensität der Strahlungsquelle 105 und die Temperatur der Heizeinrichtung 113 zeitlich zu steuern, beispielsweise anhand vorgegebener Intensitäts- und Temperaturverläufe.

Die Steuereinrichtung 119 kann zudem einen angelernten Algorithmus zum Steuern der Strahlungsquelle 105 und/oder der Heizeinrichtung 113 umfassen. Der Algorithmus kann ein Machine-Learning-Algorithmus sein oder ein künstliches neuronales Netz umfassen. Der Algorithmus wird anhand von Trainingsdaten angelernt.

Dadurch wird beispielsweise der technische Vorteil erreicht, dass eine effiziente Technologie verwendet wird, um auf Basis von experimentellen Daten automatisch ein spezifisches Belichtungs-Temperatur-Programm zu generieren und einen gewünschten Farbton zu erzielen. Die experimentellen Daten dienen als Trainingsdaten zur Ermittlung des Farbtons. Wird dem Machine-Learning-Algorithmus ein Soll-Farbton als Eingabe übergeben, kann dieser ein geeignetes Belichtungs-Temperatur-Programm zum Steuern der Strahlungsquelle 105 und/oder der Heizeinrichtung 113 ermitteln. Auf diese Weise kann das Belichtungs-Temperatur-Programm mithilfe des Machine-Learning-Algorithmus automatisch generiert werden. Das Belichtungs-Temperatur-Programm kann im Hintergrund mittels der Machine-Learning-Technologie generiert und der Steuereinrichtung 119 übergeben werden.

Die Steuereinrichtung 119 kann auch eine elektronische Nachschlagetabelle (Lookup Table) umfassen, in der zu vorgegebenen Farbtönen des Dentalobjekts 101, die jeweiligen Steuerdaten für die Strahlungsquelle 105 und die Heizeinrichtung 113 gespeichert sind. Auf diese Weise lässt sich das Dentalobjekt 101 mit dem gewünschten Farbton automatisch erzeugen.

Der Ofen 100 kann eine einzige oder mehrere Strahlungsquellen 105 zum Emittieren von Strahlung mit einer Wellenlänge umfassen, die kleiner als 350 nm ist. Durch eine einzige Strahlungsquelle 105 wird der technische Aufwand zum Herstellen des Ofens 100 verringert. Beim Einsatz einer einzigen Strahlungsquelle 105 ist es vorteilhaft das Dentalobjekt 101 in verschiedenen räumlichen Richtungen zu bewegen, so dass die Strahlung auf alle Bereiche des Dentalobjektes 101 treffen kann.

Zu diesem Zweck umfasst der Ofen 100 eine Bewegungseinrichtung 111 zum Bewegen des Dentalobjekts 101 vor der Strahlungsquelle 105 oder der Heizeinrichtung 113. Die Bewegungsrichtung 111 ist ausgebildet, das Dentalobjekt 101 in einer Höhe zu verfahren und/oder gegenüber der Strahlungsquelle 105 oder der Heizeinrichtung 113 zu drehen. Die Drehachse ist beispielsweise eine vertikale Achse (z-Achse). Entlang der Drehachse kann das Dentalobjekt 101 zusätzlich linear verfahren werden.

Die Bewegungseinrichtung 111 ist beispielsweise durch einen Drehteller gebildet, auf dem das Dentalobjekt 101 angeordnet werden kann. Der Drehteller ist vor der Strahlungsquelle 105 oder der Heizeinrichtung 113 drehbar und in einer Höhe verstellbar. Zu diesem Zweck wird der Drehteller beispielsweise von Elektromotoren über eine passende Mechanik angetrieben.

Die Bewegungseinrichtung 111 kann aber auch durch einen mechanischen Arm gebildet werden, mit dem das Dentalobjekt 101 im inneren der Kammer 103 in allen Raumrichtungen bewegt werden kann. Mit diesem Arm kann das Dentalobjekt 101 steuerbar vor der Strahlungsquelle 105 bewegt werden. Sowohl das Dentalobjekt 101 als auch die Strahlungsquelle 105 oder die Heizeinrichtung 113 können in x-, y- und z-Richtung positionierbar sein.

Das Dentalobjekt 101 kann beispielsweise auf einem beweglichen Tisch angeordnet sein, der in den drei Raumrichtungen beweglich ist. Die Strahlungsquelle 105 kann eine Lichtleitfaser umfassen, die in den drei Raumrichtungen beweglich ist. Die Bewegung der Strahlungsquelle 105 oder der Heizeinrichtung 113 als auch des Dentalobjekts 101 lässt sich über einen Roboterarm realisieren.

Die Bewegungseinrichtung 111 kann ebenfalls von der elektronischen Steuereinrichtung 119 gesteuert werden. In der elektronischen Steuereinrichtung 119 kann auch ein Bewegungsprogramm gespeichert sein, dass die Bewegungseinrichtung 111 steuert und dadurch das Dentalobjekt 101 in einem vorgegebenen zeitlichen Ablauf in Bezug zur Strahlungsquelle 105 oder der Heizeinrichtung 113 bewegt. Durch das Bewegungsprogramm kann das Dentalobjekt 101 gegenüber der Strahlungsquelle 105 oder der Heizeinrichtung 113 positioniert werden. Dabei lassen sich nacheinander unterschiedliche Positionen anfahren.

Andersherum ist es aber auch möglich, die Strahlungsquelle 105 oder die Heizeinrichtung über eine weitere Bewegungseinrichtung in einer Höhe zu verfahren und/oder um das Dentalobjekt 101 herumzubewegen. Auch zu diesem Zweck können Elektromotoren über eine passende Mechanik angetrieben werden. Im Allgemeinen sind das Dentalobjekt 101 und/oder die Strahlungsquelle frei beweglich.

Beim Einsatz mehrerer Strahlungsquellen 105 können diese um das Dentalobjekt 101 herum angeordnet sein. Dadurch kann das Dentalobjekt 101 von mehreren Seiten beleuchtet werden. In diesem Fall kann auf eine Bewegungseinrichtung 111 verzichtet werden.

Auch die Heizeinrichtung 113 kann beweglich angeordnet sein, so dass diese in einer Höhe verändert werden kann und um das Dentalobjekt 101 herumbewegt werden kann. Vor der Heizeinrichtung 113 kann ebenfalls eine Blende 121 angeordnet sein, die die seitlichen Bereiche der Strahlung abschirmt, wie beispielsweise eine Lochblende.

Die Temperatur des Dentalobjekts 101 in der Kammer 103 kann über ein Strahlungspyrometer oder ein geeignetes Thermoelement bestimmt werden. Das Thermoelement kann zu diesem Zweck zum Dentalobjekt 101 geführt werden. Die Signale über die Temperatur des Dentalobjektes 101 werden der Steuereinrichtung 119 zugeführt. Auf diese Weise kann die Steuereinrichtung 119 die Temperatur präzise auf einen vorgegebenen Wert einregeln.

Der Ofen 100 kann eine elektronische Kamera 125 zum Erfassen eines Farbwertes des Dentalobjektes 101 umfassen. Die elektronische Kamera 125 ist in der Lage, ein Bild des Dentalobjektes 101 aufzunehmen. Durch die elektronische Kamera 125 lässt sich beispielsweise ein RGB-Farbwert oder einen L*a*B-Farbwert des Dentalobjektes 101 erfassen und an die Steuereinrichtung 119 übertragen. Durch die Steuereinrichtung 119 kann die Heizeinrichtung 113 deaktiviert werden, wenn der RGB-Farbwert einem vorgegebenen RGB-Farbwert entspricht.

Sobald die thermische Behandlung des Dentalobjektes 101 abgeschlossen ist, kann das Dentalobjekt 101 auf Zimmertemperatur heruntergekühlt werden. Dies geschieht über eine Kühleinrichtung 123 zum Kühlen des erwärmten Dentalobjektes 101. Beispielsweise wird das Dentalobjekt 101 mittels eines Luftstroms gekühlt, der durch einen Ventilator als Kühleinrichtung 123 erzeugt wird. Die Kühleinrichtung 123 kann ebenfalls von der Steuereinrichtung 119 aktiviert und deaktiviert werden.

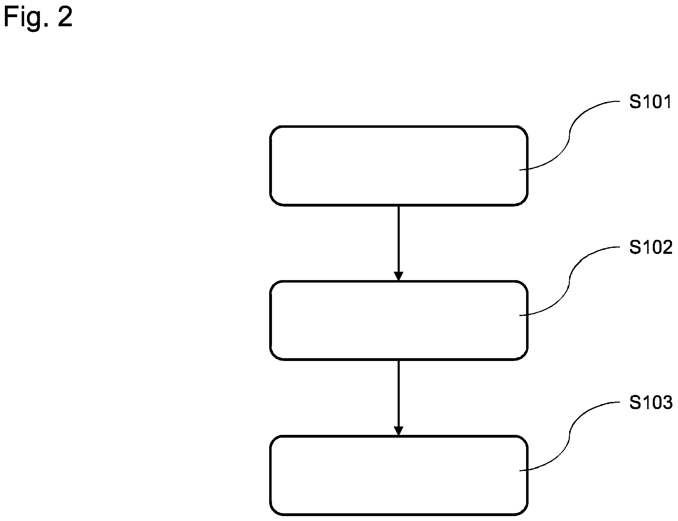

Fig. 2 zeigt ein Blockdiagramm eines Verfahrens zum Erhitzen des Dentalobjekts 101. Das Verfahren umfasst den Schritt S101 eines Aufnehmens des Dentalobjekts 101 in der Kammer 103. Im Schritt S102 wird Strahlung mit einer Wellenlänge, die kleiner als 350 nm ist, in die Kammer 103 durch die Strahlungsquelle 105 emittiert, so dass diese auf das Dentalobjekt 101 trifft. Im Schritt S103 wird das Dentalobjekt 101 in der Kammer 103 durch die Heizeinrichtung 113 auf eine vorgegebene Temperatur erhitzt. Bereiche des Dentalobjekts 101, die der Strahlung ausgesetzt werden, nehmen nach dem Erhitzen des Dentalobjekts 101 eine Farbe an, die von der vorherigen Belichtung abhängt. Durch dieses Verfahren wird der technische Vorteil erreicht, dass das Dentalobjekt 101 sicher zur Farbgebung in ein und demselben Gerät belichtet und erwärmt werden kann.

Alle in Verbindung mit einzelnen Ausführungsformen der Erfindung erläuterten und gezeigten Merkmale können in unterschiedlicher Kombination in dem erfindungsgemäßen Gegenstand vorgesehen sein, um gleichzeitig deren vorteilhafte Wirkungen zu realisieren.

Alle Verfahrensschritte können durch Einrichtungen implementiert werden, die zum Ausführen des jeweiligen Verfahrensschrittes geeignet sind. Alle Funktionen, die von gegenständlichen Merkmalen ausgeführt werden, können ein Verfahrensschritt eines Verfahrens sein.

Der Schutzbereich der vorliegenden Erfindung ist durch die Ansprüche gegeben und wird durch die in der Beschreibung erläuterten oder den Figuren gezeigten Merkmale nicht beschränkt.

### BEZUGSZEICHENLISTE

- 100: Ofen
- 101: Dentalobjekt
- 103: Kammer
- 105: Strahlungsquelle
- 107: Einstellungseinrichtung
- 109: Zeitschalteinrichtung
- 111: Bewegungsrichtung
- 113: Heizeinrichtung
- 115: Tür
- 117: Datenschnittstelle
- 119: Steuereinrichtung
- 121: Blende
- 123: Kühleinrichtung
- 125: elektronische Kamera

## Patentansprüche

1. Ofen (100) zum Erhitzen eines Dentalobjektes (101), mit:
- einer Kammer (103) zur Aufnahme des Dentalobjekts (101) ;
- einer Strahlungsquelle (105) zum Emittieren von Strahlung mit einer Wellenlänge, die kleiner als 350 nm ist, in die Kammer (103); und
- einer Heizeinrichtung (113) zum Erhitzen des Dentalobjekts (101) in der Kammer (103).

2. Ofen (100) nach Anspruch 1, wobei die Heizeinrichtung (113) ausgebildet ist, das Dentalobjekt (101) auf eine Temperatur bis zu 1200°C zu erhitzen.

3. Ofen (100) nach einem der vorangehenden Ansprüche, wobei der Ofen (100) eine Steuereinrichtung (119) zum Steuern der Strahlungsquelle (105) und/oder der Heizeinrichtung (113) umfasst.

4. Ofen (100) nach Anspruch 3, wobei die Steuereinrichtung (119) einen angelernten Algorithmus zum Steuern der Strahlungsquelle (105) und/oder der Heizeinrichtung (113) umfasst.

5. Ofen (100) nach Anspruch 3 oder 4, wobei die Steuereinrichtung (119) ausgebildet ist, die Strahlungsquelle (105) und Heizeinrichtung (113) gleichzeitig oder zeitversetzt zu aktivieren.

6. Ofen (100) nach einem der vorangehenden Ansprüche, wobei der Ofen (100) eine elektronische Kamera (125) zum Erfassen eines Farbwertes des Dentalobjektes (101) umfasst.

7. Ofen (100) nach Anspruch 6, wobei der Ofen (100) ausgebildet ist, ein Erhitzen des Dentalobjekts (101) zu beenden, wenn das Dentalobjektes (101) einen vorgegebenen Farbwert erreicht hat.

8. Ofen (100) nach einem der vorangehenden Ansprüche, wobei der Ofen (100) eine Kühleinrichtung (123) zum Kühlen des erwärmten Dentalobjektes (101) umfasst.

9. Ofen (100) nach einem der vorangehenden Ansprüche, wobei die Heizeinrichtung (113) durch eine Infrarot-Strahlungsquelle, eine Laser-Strahlungsquelle, eine Mikrowellen-Strahlungsquelle oder eine Induktions-Strahlungsquelle gebildet ist.

10. Ofen (100) nach einem der vorangehenden Ansprüche, wobei der Ofen (100) eine Bewegungseinrichtung (111) zum Bewegen des Dentalobjekts (101) vor der Heizeinrichtung (105) und/oder der Strahlungsquelle umfasst.

11. Verfahren zum Erhitzen eines Dentalobjekts (101), mit den Schritten:
- Aufnehmen (S101) des Dentalobjekts (101) in einer Kammer (103); und
- Emittieren (S102) von Strahlung mit einer Wellenlänge, die kleiner als 350 nm ist, in die Kammer (103) durch eine Strahlungsquelle (105); und
- Erhitzen (S103) des Dentalobjekts (101) in der Kammer (103) durch eine Heizeinrichtung (113).

12. Verfahren nach Anspruch 11, wobei eine Intensität der Strahlungsquelle (105) und eine Temperatur der Heizeinrichtung (113) zeitlich gesteuert werden.

13. Verfahren nach Anspruch 11 oder 12, wobei die Strahlungsquelle (105) und Heizeinrichtung (113) gleichzeitig oder zeitversetzt aktiviert werden.

14. Verfahren nach einem der Ansprüche 11 bis 13, wobei ein Farbwert des Dentalobjektes (101) durch eine elektronische Kamera (125) erfasst wird.

15. Verfahren nach Anspruch 14, wobei ein Erhitzen des Dentalobjekts (101) beendet wird, wenn das Dentalobjektes (101) einen vorgegebenen Farbwert erreicht hat.

## Claims

1. A furnace (100) for heating a dental object (101), comprising:
- a chamber (103) for receiving the dental object (101);
- a radiation source (105) for emitting radiation having a wavelength smaller than 350 nm into the chamber (103); and
- a heating means (113) for heating the dental object (101) in the chamber (103).

2. The furnace (100) according to claim 1, wherein the heating means (113) is configured to heat the dental object (101) to a temperature up to 1200°C.

3. The furnace (100) according to any of the preceding claims, wherein the furnace (100) comprises a control device (119) for controlling the radiation source (105) and/or the heating means (113).

4. The furnace (100) according to claim 3, wherein the control device (119) comprises a learned algorithm for controlling the radiation source (105) and/or the heating means (113).

5. The furnace (100) according to claim 3 or 4, wherein the control device (119) is configured to activate the radiation source (105) and heating means (113) simultaneously or with a time delay.

6. The furnace (100) according to any of the preceding claims, wherein the furnace (100) comprises an electronic camera (125) for detecting a color value of the dental object (101).

7. The furnace (100) according to claim 6, wherein the furnace (100) is configured to terminate heating of the dental object (101) when the dental object (101) has reached a predetermined color value.

8. The furnace (100) according to any of the preceding claims, wherein the furnace (100) comprises a cooling means (123) for cooling the heated dental object (101).

9. The furnace (100) according to any of the preceding claims, wherein the heating means (113) is formed by an infrared radiation source, a laser radiation source, a microwave radiation source or an induction radiation source.

10. The furnace (100) according to any of the preceding claims, wherein the furnace (100) comprises moving means (111) for moving the dental object (101) in front of the heating means (105) and/or the radiation source.

11. A method of heating a dental object (101), comprising the steps of:
- receiving (S101) the dental object (101) in a chamber (103); and
- emitting (S102) radiation having a wavelength smaller than 350 nm into the chamber (103) through a radiation source (105); and
- heating (S103) the dental object (101) in the chamber (103) by a heating means (113).

12. The method according to claim 11, wherein an intensity of the radiation source (105) and a temperature of the heating means (113) are time-controlled.

13. The method according to claim 11 or 12, wherein the radiation source (105) and heating means (113) are activated simultaneously or with a time delay.

14. The method according to any of claims 11 to 13, wherein a color value of the dental object (101) is detected by an electronic camera (125).

15. The method according to claim 14, wherein heating of the dental object (101) is terminated when the dental object (101) has reached a predetermined color value.

## Revendications

1. Four (100) pour chauffer un objet dentaire (101), comprenant :
- une chambre (103) pour recevoir l'objet dentaire (101) ;
- une source de rayonnement (105) pour émettre un rayonnement ayant une longueur d'onde inférieure à 350 nm dans la chambre (103) ; et
- un dispositif de chauffage (113) pour chauffer l'objet dentaire (101) dans la chambre (103).

2. Four (100) selon la revendication 1, où le dispositif de chauffage (113) est adapté pour chauffer l'objet dentaire (101) à une température allant jusqu'à 1200°C.

3. Four (100) selon l'une des revendications précédentes, où le four (100) comprend un dispositif de commande (119) pour commander la source de rayonnement (105) et/ou le dispositif de chauffage (113).

4. Four (100) selon la revendication 3, où le dispositif de commande (119) comprend un algorithme appris pour commander la source de rayonnement (105) et/ou le dispositif de chauffage (113) .

5. Four (100) selon la revendication 3 ou 4, où le dispositif de commande (119) est configuré pour activer la source de rayonnement (105) et le dispositif de chauffage (113) simultanément ou en différé.

6. Four (100) selon l'une quelconque des revendications précédentes, où le four (100) comprend une caméra électronique (125) pour détecter une valeur de couleur de l'objet dentaire (101) .

7. Four (100) selon la revendication 6, où le four (100) est configuré pour arrêter un chauffage de l'objet dentaire (101) lorsque l'objet dentaire (101) a atteint une valeur de couleur prédéterminée.

8. Four (100) selon l'une des revendications précédentes, où le four (100) comprend un dispositif de refroidissement (123) pour refroidir l'objet dentaire (101) chauffé.

9. Four (100) selon l'une quelconque des revendications précédentes, où le dispositif de chauffage (113) est formé par une source de rayonnement infrarouge, une source de rayonnement laser, une source de rayonnement micro-ondes ou une source de rayonnement inductif.

10. Four (100) selon l'une des revendications précédentes, où le four (100) comprend un dispositif de déplacement (111) pour déplacer l'objet dentaire (101) devant le dispositif de chauffage (105) et/ou la source de rayonnement.

11. Procédé de chauffage d'un objet dentaire (101), comprenant les étapes suivantes :
- réception (S101) de l'objet dentaire (101) dans une chambre (103) ; et
- émission (S102) d'un rayonnement ayant une longueur d'onde inférieure à 350 nm dans la chambre (103) par une source de rayonnement (105) ; et
- chauffage (S103) de l'objet dentaire (101) dans la chambre (103) par un dispositif de chauffage (113).

12. Procédé selon la revendication 11, où une intensité de la source de rayonnement (105) et une température du moyen de chauffage (113) sont contrôlées dans le temps.

13. Procédé selon la revendication 11 ou 12, où la source de rayonnement (105) et le dispositif de chauffage (113) sont activés simultanément ou en différé.

14. Procédé selon l'une des revendications 11 à 13, où une valeur de couleur de l'objet dentaire (101) est détectée par une caméra électronique (125).

15. Procédé selon la revendication 14, où un chauffage de l'objet dentaire (101) est arrêté lorsque l'objet dentaire (101) a atteint une valeur de couleur prédéterminée.
